# NEUE EUROPÄISCHE PATENTSCHRIFT

(11) **EP 2 572 123 B2**
(45) Veröffentlichungstag und Bekanntmachung des Hinweises auf die Entscheidung über den Einspruch: **22.02.2017**
(45) Hinweis auf die Patenterteilung: 06.08.2014
(21) Anmeldenummer: 11715441.9
(22) Anmeldetag: 15.04.2011
(51) Int. Cl.: F16H 61/00

(54) **FAHRZEUG MIT AUTOMATIKGETRIEBE UND EINER MOTORSTART-/STOPPAUTOMATIK**
VEHICLE HAVING AN AUTOMATIC TRANSMISSION AND AN AUTOMATIC ENGINE START/STOP FACILITY
VÉHICULE ÉQUIPÉ D'UNE BOÎTE AUTOMATIQUE ET D'UN DISPOSITIF AUTOMATIQUE DE MARCHE/ARRÊT DE MOTEUR

(30) Priorität: 17.06.2010 DE 102010030226; 17.05.2010 DE 102010028997
(43) Veröffentlichungstag der Anmeldung: 27.03.2013
(73) Patentinhaber: Bayerische Motoren Werke Aktiengesellschaft, 80809 München (DE)
(72) Erfinder: NEUNER, Josef, 83064 Raubling (DE)
(86) Internationale Anmeldenummer: PCT/EP2011/001927
(87) Internationale Veröffentlichungsnummer: WO 2011/144284

(56) Entgegenhaltungen:
- EP-A2- 1 898 101
- CH-A- 241 736
- DE-A1- 2 216 776
- DE-A1- 4 323 133
- DE-A1-102006 014 756
- DE-A1-102009 047 828
- US-A- 2 139 185
- US-A- 2 225 539
- US-A- 3 138 221

## Beschreibung

Die vorliegende Erfindung betrifft ein Fahrzeug mit einem Automatikgetriebe und einer Motorstart-/Stoppautomatik gemäß dem Oberbegriff des Patentanspruches 1.

Ein derartiges Fahrzeug ist aus der DE 10 2006 014 756 A1 bekannt. Zum relevanten Stand der Technik zählen ferner die EP 1 898 101 A2, 10 2009 047 828 A1, US 3 138 221 A sowie die US 2 225 539.

Moderne Fahrzeuge mit Verbrennungsmotor werden in zunehmendem Umfang mit einer sogenannten Motorstart-/Stoppautomätik ausgerüstet. Hierbei handelt es sich um eine komplexe elektronische Steuerung bzw. Regelung, die bei "Fahrunterbrechungen", wie z.B. bei Ampelstopps, den Verbrennungsmotor abschaltet und ihn automatisch wieder startet, wenn der Fahrer ein "Wiederanfahrsignal" gibt. Derartige Motorstart-/Stoppsysteme wurden zunächst bei Fahrzeugen mit manuellem Schaltgetriebe eingeführt. Bei Fahrzeugen mit Handschaltgetrieben wird der Motor bei stehendem Fahrzeug ausgeschaltet, sobald das Getriebe in den Leerlaufzustand jeschaltet wird und bestimmte Randbedingungen (Motoröttemperatur, Außentemperatur etc.) erfüllt sind. Durch Treten der Kupplung wird der Verbrennungsmotor automatisch wieder gestartet.

Fahrzeuge mit Automatikgetriebe weisen diverse Getriebeschaltelemente (Kupplungen, Bremsen etc.) auf, die von einer Elektrohydraulik angesteuert werden. Voraussetzung für eine Ansteuerung ist, dass ein hinreichend hoher Öldruck vorliegt. Beim Starten eines Fahrzeugs mit Automatikgetriebe und mechanisch vom Verbrennungsmotor angetriebener Getriebeölpumpe kann es mitunter knapp eine Sekunde dauern, bis die Ölpumpe einen für Schaltvorgänge und somit zum Anfahren hinreichenden Öldruck aufgebaut hat. Bei Fahrzeugen mit Automatikgetriebe und einer Motorstärt-/Stoppautomatik sollte der zum Anfahren erforderliche Öldruck jedoch möglichst verzögerungsfrei nach dem Starten des Verbrennungsmotors vorliegen, da im "Stopp-and-Go-Betrieb" regelmäßige Anfahrverzögerungen von mehreren Zehntel Sekunden vom Kunden nicht akzeptiert würden.

Aufgabe der Erfindung ist es, ein Fahrzeug mit Verbrennungsmotor, Automatikgetriebe und einer Motorstart-/Stoppautomatik zu schaffen, das im Motorstart-/Stoppbetrieb ein möglichst verzögerungsfreies Anfahren nach dem Starten des Verbrennungsmotors ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeuge mit einem Verbrennungs-motor und einem Automatikgetriebe, das eine elektrohydraulische Getriebesteuerung aufweist. Schaltelemente des Getriebes, wie z.B. Kupplungen oder Bremsen, werden hydraulisch von der elektrohydraulischen Getriebesteuerung angesteuert. Der hierfür erforderliche Hydraulikdruck wird von einer von dem Verbrennungsmotor mechanisch angetriebenen Getriebeölpumpe geliefert. Die Getriebeölpumpe kann direkt oder indirekt mechanisch vom Verbrennungsmotor angetrieben sein. Sie kann z.B. auf einer Getriebeeingangswelle des Automatikgetriebes angeordnet sein. Bei der Getriebeölpumpe kann es sich z.B. um eine Zahnradpumpe öder um eine Flügelzellenpumpe handeln.

Das Fahrzeug weist ferner eine Motorstart-/Stoppelektronik auf, welche in Betriebsphasen, in denen das Fahrzeug vorübergehend angehalten wird, wie z.B. im "Stopp-and-Go-Betrieb", an einer roten Ampel, etc., bei Vorliegen vorgegebener Betriebsparameter den Verbrennungsmotor "automatisch" abschaltet und bei Vorliegen eines vom Fahrer vorgegebenen "Wiederanfahrsignals" automatisch startet.

Der Kern der Erfindung besteht darin, dass eine rein mechanische Druck- bzw. Volumenspeichereinrichtung zur Speicherung von Hydraulikflüssigkeit vorgesehen ist, die in einer Zeitspanne nach dem erneuten Starten des Verbrennungsmotors, in der die Getriebeölpumpe erst noch Druck aufbauen muss, der elektrohydraulischen Getriebesteuerung gespeicherten Hydraulikdruck bzw. gespeicherte Hydraulikflüssigkeit bereitstellt.

Wesentlich ist, dass das "Auslösen" bzw. Entleeren der Druck bzw. Volumenspeichereinrichtung nach dem erneuten Starten des Verbrennungsmotors rein mechanisch bzw. rein hydraulisch erfolgt, d.h. ohne elektrisch angesteuerte Komponenten. "Auslüsen" bedeutet in diesem Zusammenhang das "Umschalten", der Druck- bzw. Volumenspeichereinrichtung von einem Zustand, in dem sie Hydraulikflüssigkeit speichert, in einen Zustand, in dem sie die gespeicherte Hydraulikflüssigkeit in das Hydrauliksystem der Getriebesteuerung drückt und diese dadurch unmittelbar in einen betriebsbereiten Zustand versetzt.

Das zum Auslösen erforderliche Signal wird durch den sich aufbauenden Druck gebildet, der von der von dem Verbrennungsmotor angetriebenen Getriebeölpumpe erzeugt wird.

Insgesamt erfolgt das "Laden", "Druckspeichern" und "Entladen". der Druck- bzw. Volumenspeichereinrichtung rein mechanisch bzw. rein hydromechanisch/hydraulisch, d.h. ohne jegliche elektrische bzw. elektronische Steuerung oder Regelung sowie ohne jegliche elektrische bzw. elektronische Komponenten.

Dies hat den Vorteil, dass in konstruktiv einfacher und kostengünstiger Weise erreicht wird, dass zum Anfahren erforderliche Schaltvorgänge im Getriebe annähernd verzögerungsfrei unmittelbar nach dem Starten des Verbrennungsmotors durchgeführt werden können. Gegenüber herkömmlichen Fahrzeugen mit Automatikgetriebe kann also wesentlich schneller "Anfahrbereitschaft" hergestellt werden.

Gemäß der Erfindung weist die Druckspeichereinrichtung einen Speicherzylinder mit einem verschieblich darin angeordneten Speicherkolben auf, der durch eine Feder in einer Druckbeaufschlagungsrichtung vorgespannt ist und der durch eine rein mechanische Arretierungseinrichtung in einem gespannten Zustand arretierbar ist. Wird der Verbrennungsmotor abgeschaltet und anschließend wieder neu gestartet, braucht lediglich die Arretierungseinrichtung gelöst zu werden, um die in der Feder gespeicherte Federenergie in Hydraulikdruck umzusetzen und damit die Zeitspanne zu überbrücken, bis die Getriebeölpumpe den normalen Betriebsdruck erreicht hat.

Die Arretierungseinrichtung ist durch einen mit dem Speicherkolben zusammenwirkenden Sperrkolben gebildet, der verschieblich in einem Sperrzylinder angeordnet ist. An dem Sperrkolben kann ein Sperrzapfen vorgesehen sein, der in eine Ausnehmung einer Kolbenstange des Speicherkolbens einrastbar ist. Im eingerasteten Zustand sperrt die Arretierungseinrichtung. Der Sperrkolben kann mittels einer Sperrfeder in Richtung seiner Sperrstellung vorgespannt sein.

Nach einer Weiterbildung der Erfindung weist der Sperrkolben eine als Blende fungierende Durchgangsbohrung auf. Der Sperrzylinder ist durch den Sperrkolben in einen ersten und einen zweiten Sperrzylinderraum unterteilt, die über die Durchgangsbohrung in Fluidverbindung miteinander stehen.

Der erste Sperrzylinderraum kann unmittelbar in Fluidverbindung mit einem Druckausgang der Getriebeölpumpe stehen. Der Druckausgang der Getriebeölpumpe kann ferner über ein Rückschlagventil in Fluidverbindung mit dem zweiten Sperrzylinderraum und der elektrohydraulischen Getriebesteuerung stehen. Das Rückschlagventil ist so angeordnet, dass es durch Hydraulikdruck der Getriebeölpumpe öffenbar ist (und in umgekehrter Druckrichtung sperrt).

Wichtig ist insbesondere, dass die Sperrfeder so viel Staudruck aufbaut, dass der Sperrkolben betätigt wird.

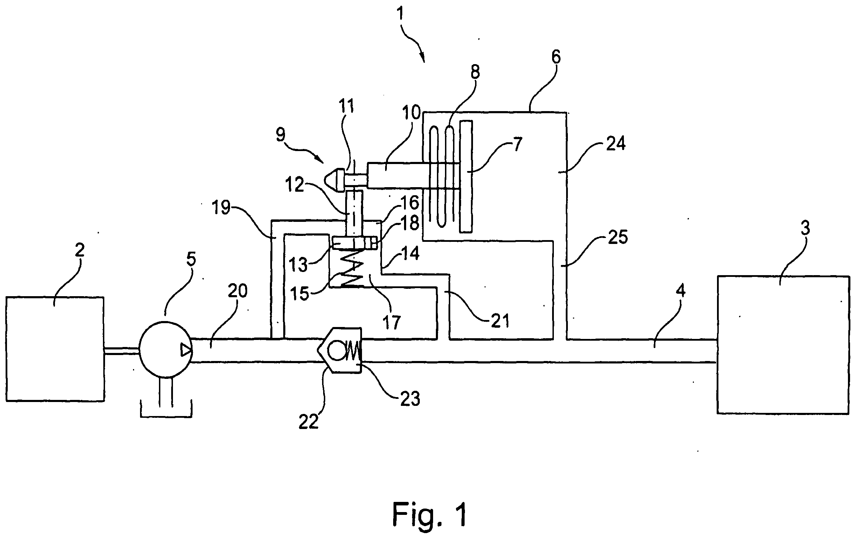

Im Folgenden wird die Erfindung im Zusammenhang mit der Zeichnung näher erläutert. Die einzige Figur 1 zeigt das Grundprinzip der Erfindung in schematischer Darstellung.

Figur 1 zeigt eine Druckspeichereinrichtung 1 für ein Fahrzeug, das von einem Verbrennungsmotor 2 angetrieben wird und das ein Automatikgetriebe 3 und eine Motorstart-/Stoppautomatik (nicht dargestellt) aufweist. Die Motorstart-/Stoppautomatik ist dazu vorgesehen, in Betriebsphasen, in denen das Fahrzeug vorübergehend angehalten wird, bei Vorliegen vorgegebener Betriebsparameter den Verbrennungsmotor automatisch abzuschalten und bei Vorliegen eines vom Fahrer vorgegebenen Wiederanfahrsignals automatisch wieder zu starten.

Das Automatikgetriebe 3 weist ein oder mehrerevon einer elektrohydraulischen Getriebesteuerung angesteuerte Schaltelemente (z. B. Kupplungen, Bremsen etc.) auf. Für die Ansteuerung dieser Schaltelemente wird dem Automatikgetriebe Hydraulikdruck über eine Eingangsleitung 4 zur Verfügung gestellt. Der Eingangsdruck wird von einer mechanisch vom Verbrennungsmotor 2 angetriebenen Getriebeölpumpe 5 erzeugt.

Wird der Verbrennungsmotor 2 durch die Motorstart-/Stoppautomatik vorübergehend abgeschaltet, so fällt der Hydraulikdruck am Druckeingang 4 ab. Wird der Verbrennungsmotor 2 anschließend wieder neu gestartet, so kann es einige Zehntelsekunden dauern, bis die mechanische Getriebeölpumpe wieder den vollen Betriebsdruck erreicht hat. Mittels der Druckspeichereinrichtung 1 wird erreicht, dass dennoch nahezu verzögerungsfrei der zum Anfahren, d.h. zum Schalten von Getriebeschaltelementen erforderlichen Hydraulikdruck am Druckeingang 4 anliegt.

Die Druckspeichereinrichtung 1 weist hierzu einen Speicherzylinder 6 auf, in dem verschieblich ein Speicherkolben 7 angeordnet ist. Der Speicherkolben 7, der sich in der in Figur 1 gezeigten Stellung in einer "geladenen" Position befindet, ist durch eine Druckfeder 8 nach rechts vorgespannt. In dem in Figur 1 gezeigten Zustand wird der Speicherkolben 7 in der "geladenen" Position gehalten. Eine mit dem Speicherkolben 7 verbundene Kolbenstange 10 weist eine Ausnehmung 11 auf, in die ein Sperrzapfen 12, der mit einem Sperrkolben 13 verbunden ist, eingerastet ist. Der Sperrkolben 13 ist verschieblich in einem Sperrzylinder 14 angeordnet. Der Sperrkolben 13 ist durch eine Feder 15, die hier in dem Sperrzylinder 14 angeordnet ist, in Sperrrichtung vorgespannt.

Der Sperrkolben 13 unterteilt den Sperrzylinder in einen ersten Sperrzylinderraum 16 und einen zweiten Sperrzylinderraum 17. In dem Sperrkolben 13 ist eine als Blende fungierende Durchgangsbohrung 18 vorgesehen, über die die beiden Sperrzylinderräume 16, 17 in Fluidverbindung miteinander stehen.

Der erste Spenzylinderraum 16 steht über eine Fluidleitung 19 in Fluidverbindung mit einem Druckausgang 20 der mechanischen Getriebeölpumpe 5. Der zweite Sperrzylinderraum steht über eine Fluidleitung 21 in Fluidverbindung mit dem Druckeingang 4 des Automatikgetriebes 3. Zwischen den beiden Fluidleitungen 19, 21 und zwischen dem Druckausgang 20 der mechanischen Getriebeölpumpe 5 und dem Druckeingang 4 des Automatikgetriebes 3 ist ein Rückschlagventil 22 vorgesehen, das durch eine Feder 23 entgegen der Getriebeölpumpe 5 vorgespannt ist. Das Rückschlagventil kann durch Hydraulikdruck der Getriebeölpumpe 5 geöffnet werden und sperrt in umgekehrter Richtung.

Der oben bereits erwähnte Speicherzylinder 6 weist einen Speicherraum 24 auf, der über eine Fluidleitung 25 mitdem Druckeingang 4 des Automatikgetriebes 3 in Fluidverbindung steht.

Im Folgenden wird die Funktionsweise der Druckspeichereinrichtung 1 näher erläutert. Wird der Verbrennungsmotor 2 von der Motorstart-/Stoppautomatik abgeschaltet, so sinkt, wie bereits erwähnt, der Druck am Druckeingang 4 ab. Der Speicherraum 24 ist dabei weiterhin vollständig mit Hydraulikflüssigkeit gefüllt.

Wird der Verbrennungsmotor erneut gestartet, so läuft die mechanische Getriebeölpumpe 5, die unmittelbar an die Kurbelwelle des Verbrennungsmotors 2 angeschlossen sein kann, an und baut innerhalb einiger zehntel Sekunden den zum Schalten des Automatikgetriebes erforderlichen Hydraulikdruck auf. In der Druckaufbauphase sperrt das Rückschlagventil 22 dabei zunächst noch.

Der von der Getriebeölpumpe 5 aufgebaute Hydraulikdruck liegt dabei über die Hydraulikleitung 19 auf der dem ersten Sperrzylinderraum 16 zugewandten Seite des Sperrkolbens 13 an und drückt diesen entgegen der von der Sperrfeder 15 ausgeübten Druckkraft nach unten, wodurch die Arretierungseinrichtung 9 geöffnet wird. Nach dem Öffnen der Arretierungseinrichtung 9 wird der Speicherkolben 7 durch die Druckfeder 8 nach rechts gedrückt. Dabei wird die in der Druckfeder 8 gespeicherte Federenergie über die im Speicherraum 24 befindliche Hydraulikflüssigkeit in Hydraulikdruck umgesetzt, der dann unmittelbar am Druckeingang 4 zur Verfügung steht. Das Automatikgetriebe 3 kann somit nahezu verzögerungsfrei unmittelbar nach dem Starten des Verbrennungsmotors geschaltet werden, was ein nahezu verzögerungsfreies Anfahren unmittelbar nach dem Verbrennungsmotorstart ermöglicht.

Bei laufendem Verbrennungsmotor 2 füllt sich der Speicherzylinder 6, wobei in den Fluidleitungen 19 und 21 etwa dasselbe Druckniveau herrscht, so dass der Sperrkolben 13 wieder in Sperrstellung geht.

## Patentansprüche

1. Fahrzeug mit
- einem Verbrennungsmotor (2),
- einem Automatikgetriebe (3), das eine elektrohydraulische Getriebesteuerung aufweist,
- einer direkt oder indirekt von dem Verbrennungsmotor (2) angetriebenen Getriebeölpumpe (5) und
- einer Motorstart-/Stoppelektronik, welche in Betriebsphasen, in denen das Fahrzeug vorübergehend angehalten wird, bei Vorliegen vorgegebener Betriebsparameter den Verbrennungsmotor abschaltet und bei Vorliegen eines Wiederanfahrsignals startet, wobei
• eine Druck- bzw. Volumenspeichereinrichtung (1) vorgesehen ist, die, in einer Zeitspanne nach dem Starten des Verbrennungsmotors (2), in der die Getriebeölpumpe (5) erst noch Druck aufbaut, der elektrohydraulischen Getriebesteuerung gespeicherten Hydraulikdruck bzw. gespeicherte Hydraulikflüssigkeit bereitstellt und
• die Druckspeichereinrichtung (1) einen Speicherzylinder (6) mit einem verschieblich darin angeordneten Speicherkolben (7) aufweist, der durch eine Feder (8) in eine Druckbeaufschlagungsrichtung vorgespannt ist und der durch eine Arretierungseinrichtung (9) in einem gespannten Zustand arretierbar ist,
• die Druck- bzw. Volumenspeichereinrichtung (1) eine rein mechanische Druck- bzw. Volumenspeichereinrichtung (1) und
• die Arretierungseinrichtung (9) eine rein mechanische Arretierungseinrichtung (9) ist, wobei ein Laden, Druckspeichern und Entladen der Druck- bzw. Volumenspeichereinrichtung (1) ohne jegliche elektrische bzw. elektronische Steuerung oder Regelung sowie ohne jegliche elektrische bzw. elektronische Komponenten erfolgt,
**dadurch gekennzeichnet, dass**
die Arretierungseinrichtung (9) einen mit dem Speicherkolben (7) zusammenwirkenden Sperrkolben (13) aufweist, der verschieblich in einem Sperrzylinder (14) angeordnet ist.

2. Fahrzeug nach Anspruch 1, **dadurch gekennzeichnet, dass** der Sperrkolben (13) einen Sperrzapfen (12) aufweist, der in eine Ausnehmung (11) einer Kolbenstange (10) des Speicherkolbens (7) einrastbar ist.

3. Fahrzeug nach einem der Ansprüche 1 oder 2, **dadurch gekennzeichnet, dass** der Sperrkolben (13) mittels einer Sperrfeder (15) in Richtung einer Sperrstellung vorgespannt ist.

4. Fahrzeug nach einem der Ansprüche 1 bis 3, **dadurch gekennzeichnet, dass** der Sperrkolben (13) eine als Blende fungierende Durchgangsbohrung (18) aufweist.

5. Fahrzeug nach einem der Ansprüche 1 bis 4, **dadurch gekennzeichnet, dass** der Sperrzylinder (14) durch den Sperrkolben (13) in einen ersten Spenzylinderraum (16) und einen zweiten Spenzylinderraum (17) unterteilt ist.

6. Fahrzeug nach Anspruch 5, **dadurch gekennzeichnet, dass** der erste Sperrzylinderraum (16) in Fluidverbindung mit einem Druckausgang (20) der Getriebeölpumpe (5) steht.

7. Fahrzeug nach einem der Ansprüche 5 oder 6, **dadurch gekennzeichnet, dass** der Druckausgang (20) der Getriebeölpumpe (5) über ein Rückschlagventil (20) in Fluidverbindung mit dem zweiten Spenzylinderraum (17) und der elektrohydraulischen Getriebesteuerung steht.

8. Fahrzeug nach Anspruch 7, **dadurch gekennzeichnet, dass** das Rückschlagventil (22) durch Hydraulikdruck der Getriebeölpumpe öffenbar ist und in der umgekehrten Druckrichtung sperrt.

9. Fahrzeug nach einem der vorangehenden Ansprüche, **dadurch gekennzeichnet, dass** ein Umschalten der Druckspeichereinrichtung (1) von dem gespannten Zustand in einen entspannten Zustand, in dem gespeicherte Hydraulikflüssigkeit aus der Druckspeichereinrichtung (1) in ein Hydrauliksystem der Getriebesteuerung gedrückt wird, rein mechanisch bzw. rein hydraulisch, ohne elektrisch angesteuerte Komponenten erfolgt.

10. Fahrzeug nach Anspruch 9, **dadurch gekennzeichnet, dass** ein das Umschalten auslösende Signal durch den sich aufbauenden Druck gebildet ist, der von der von dem Verbrennungsmotor angetriebenen Getriebeölpumpe erzeugt wird.

## Claims

1. A vehicle comprising
- an internal combustion engine (2),
- an automatic gear unit (3) comprising an electrohydraulic gear actuator,
- a gear-oil pump (5) driven directly or indirectly by the engine (2) and
- an electronic unit for starting and stopping the engine which, during operating phases in which the vehicle is temporarily stopped, under set operating conditions, switches off the engine and starts it again when a re-start signal is received, wherein
• a pressure or volume storage device (1) is provided which, during a time after starting the engine (2) in which the gear oil pump (5) is still building up pressure, provides hydraulic pressure or stored hydraulic liquid to the electrohydraulic gear actuator, and
• the pressure storage device (1) has a storage cylinder (6) with a movable piston (7), which is biased by a spring (8) into a pressure admission direction and is lockable in a tensioned state by a locking device (9),
• the pressure or volume storage device (1) is a purely mechanical pressure or volume storage device (1) and
• the locking device (9) is a purely mechanical locking device (9), whereby the pressure or volume storage device (1) is charged, stored with pressure and discharged without any electric or electronic closed loop or open loop control and without any electric or electronic components,
**characterised in that** the locking device (9) has a shut-off piston (13) co-operating with the storage piston (7) and movable in a shut-off cylinder (14).

2. A vehicle according to claim 1, **characterised in that** the shut-off piston (13) has a pin (12) which can engage in a recess (11) in a piston rod (10) of the storage piston (7).

3. A vehicle according to claim 1 or claim 2, **characterised in that** the shut-off piston (13) is biased towards a shut-off position by a shut-off spring (15).

4. A vehicle according to any of claims 1 to 3, **characterised in that** the shut-off piston (13) has a through bore (18) serving as a shutter.

5. A vehicle according to any of claims 1 to 4, **characterised in that** the shut-off cylinder (14) is divided by the shut-off piston (13) into a first shut-off cylinder chamber (16) and a second shut-off cylinder chamber (17).

6. A vehicle according to claim 5, **characterised in that** the first shut-off cylinder chamber (16) is in fluid connection with a pressure outlet (20) of the gear-oil pump (5).

7. A vehicle according to claim 5 or claim 6, **characterised in that** the pressure outlet (20) of the gear oil pump (5) via a non-return valve (20), is in fluid connection with the second chamber (17) and with the electroliydraulic gear actuator.

8. A vehicle according to claim 7, **characterised in that** the non-return valve (22) is opened and locked in the opposite pressure direction by hydraulic pressure from the gear oil pump.

9. A vehicle according to any of the preceding claims, **characterised in that** the pressure storage device (1) is switched over from the tensioned state into a tension-free state, in which stored hydraulic fluid is pressed out of the pressure storage device (1) into a hydraulic system for the gear actuator, by purely mechanical or purely hydraulic components without electric actuation.

10. A vehicle according to claim 9, **characterised in that** a signal triggering the change-over is formed by the pressure build-up generated by the gear oil pump driven by the engine.

## Revendications

1. Véhicule comportant :
- un moteur à combustion interne (2),
- une boite de vitesses automatique (3) à commande électro-hydraulique,
- une pompe à huile de boite de vitesse (5) actionnée directement ou indirectement par le moteur à combustion interne (2), et
- une électronique de démarrage/arrêt de moteur qui, dans des phases de fonctionnement dans lesquelles le véhicule est temporairement arrêtés, et en présence de paramètres de fonctionnement prédéfinis coupe le moteur à combustion interne et le démarre en présence d'un signal de redémarrage, dans lequel :
• il est prévu un dispositif d'accumulation de pression ou de volume (1) qui, dans un laps de temps suivant le démarrage du moteur à combustion interne (2) dans lequel la pompe à huile de boite de vitesses (5) fait encore monter la pression fournit à la commande de boite de vitesse électro-hydraulique la pression hydraulique emmagasinée ou le fluide hydraulique emmagasinée,
• le dispositif accumulateur de pression (1) comporte un cylindre accumulateur (6) dans lequel est logé un piston accumulateur (7) mobile en translation dans ce cylindre, qui est précontraint par un ressort (8) dans le sens d'alimentation en pression et qui peut être bloqué par un dispositif d'arrêt (9) dans un état sous contrainte,
• le dispositif accumulateur de pression ou de volume (1) est un dispositif accumulateur de pression ou de volume purement mécanique, et
• le dispositif d'arrêt (9) est un dispositif d'arrêt (9) purement mécanique, la charge, l'accumulation de pression et la décharge du dispositif accumulateur de pression ou de volume (1) s'effectuant sans commande ou régulation électrique ou électronique et sans composant électrique ou électronique,
**caractérisé en ce que**
le dispositif d'arrêt (9) comporte un piston de blocage (13) coopérant avec le piston accumulateur (7) qui est monté mobile en translation dans un cylindre de blocage (14).

2. Véhicule conforme à la revendication 1,
**caractérisé en ce que**
le piston de blocage (13) comporte un tourillon de blocage (12) qui peut venir en prise dans un évidement (11) de la tige (10) du piston accumulateur (7).

3. Véhicule conforme à l'une des revendications 1 et 2,
**caractérisé en ce que**
le piston de blocage (13) est précontraint au moyen d'un ressort de blocage (15) dans la direction d'une position de blocage.

4. Véhicule conforme à l'une des revendications 1 à 3,
**caractérisé en ce que**
le piston de blocage (13) comporte un perçage traversant (18) faisant office de diaphragme.

5. Véhicule conforme à l'une des revendications 1 à 4,
**caractérisé en ce que**
le cylindre de blocage (14) est subdivisé par le piston de blocage (13) en une première chambre du cylindre de blocage (16) et une seconde chambre du cylindre de blocage (17).

6. Véhicule conforme à la revendication 5,
**caractérisé en ce que**
la première chambre du cylindre de blocage (16) est en liaison fluidique avec une sortie de fluide sous pression (20) de la pompe à huile de la boite de vitesses (5).

7. Véhicule conforme à l'une des revendications 5 et 6,
**caractérisé en ce que**
la sortie de fluide sous pression (20) de la pompe à huile de la boite de vitesse (5) est en liaison fluidique par l'intermédiaire d'une soupape anti-retour (20) avec la seconde chambre (17) du cylindre de blocage et la commande électro-hydraulique de la boite de vitesse.

8. Véhicule conforme à la revendication 7,
**caractérisé en ce que**
la soupape anti-retour (22) peut être ouverte par la pression hydraulique de la pompe à huile de la boite de vitesse et effectue un blocage dans la direction inverse du fluide sous pression.

9. Véhicule conforme à l'une des revendications précédentes,
**caractérisé en ce que**
la commutation du dispositif accumulateur de pression (1) de l'état contraint à un état non contraint dans lequel le fluide hydraulique emmagasiné est refoulé du dispositif accumulateur de pression (1) vers le système hydraulique de la commande de la boite de vitesses s'effectue de façon purement mécanique ou purement hydraulique sans composant à commande électrique.

10. Véhicule conforme à la revendication 9,
**caractérisé en ce qu'**
un signal déclenchant la commutation est formé par la pression qui s'établit qui est produite par la pompe à huile de la boite de vitesses actionnée par le moteur à combustion interne.
